# EUROPÄISCHE PATENTSCHRIFT

(11) **EP 1 285 825 B1**
(45) Veröffentlichungstag und Bekanntmachung des Hinweises auf die Patenterteilung: **03.11.2004**
(21) Anmeldenummer: 02013284.1
(22) Anmeldetag: 18.06.2002
(51) Int. Cl.: B60R 22/24, B60R 22/34

(54) **Befestigungsvorrichtung für einen Gurtroller**
Fixing device for a belt retractor
Dispositif de fixation pour un enrouleur de ceinture

(30) Priorität: 08.08.2001 DE 10139037
(43) Veröffentlichungstag der Anmeldung: 26.02.2003
(73) Patentinhaber: Dr.Ing. h.c.F. Porsche Aktiengesellschaft, 70435 Stuttgart (DE)
(72) Erfinder: Schwarz, Hartmut, 75331 Engelsbrand (DE); Shakory-Tabrizi, 71706 Markgröningen (DE)

(56) Entgegenhaltungen:
- US-A- 5 253 896
- PATENT ABSTRACTS OF JAPAN vol. 018, no. 589 (M-1701), 10. November 1994 (1994-11-10) -& JP 06 219241 A (HONDA MOTOR CO LTD), 9. August 1994 (1994-08-09)

## Beschreibung

Die Erfindung betrifft eine Befestigungsvorrichtung für einen Gurtroller nach dem Oberbegriff des Patentanspruches 1.

Die JP 06 219 241, die dem Oberbegriff des Anspruchs 1 entspricht, offenbart eine Befestigungsvorrichtung für einen Gurtroller in einem Kraftfahrzeug, wobei die Befestigungsvorrichtung in einen Ausschnitt eines Karosserieteils eingesetzt und randseitig mit dem Karosserieteil verbunden ist, wobei der Ausschnitt umlaufend geschlossen ist.

Aus der DE 197 35 640 A1 ist bereits eine Befestigungsvorrichtung für einen Umlenkbeschlag eines Sicherheitsgurtes bekannt geworden. Diese Befestigungsvorrichtung ist an einer Säule des Fahrzeuges befestigt, die aus einem Innenblech, einem Außenblech sowie ggf. einem zwischen Innenblech und Außenblech eingefügten Verstärkungsprofil gefertigt ist. Zur Aufnahme der Befestigungsvorrichtung ist an dem Innenblech ein seitlich geöffneter Ausschnitt vorgesehen. Am Rand dieses Ausschnittes sind am Innenblech Ausklinkungen vorgesehen, so dass Dreifach-Überlappungen im Berech der Schweißnähte vermieden werden.

Darüber hinaus ist es aus der DE 43 43 531 A1 bekannt geworden, einen Gurtaufroller für die hinteren Sitze auf der Rückseite einer blechförmigen Befestigungsvorrichtung anzuordnen. Diese Befestigungsvorrichtung ist in einen Hohlraum aufgenommen, der in einem Verstärkungsholm gebildet ist. An dieser Stelle ist im Innenblech eine Aussparung vorgesehen.

Gegenüber diesem Stand der Technik ist es Aufgabe der Erfindung, eine Befestigungsvorrichtung für einen Gurtroller zu schaffen, die eine verbesserte Befestigung erlaubt.

Diese Aufgabe wird erfindungsgemäß mit den Merkmalen der unabhängigen Ansprüche 1 und 2 gelöst. Vorrichtungsgemäß wird vorgeschlagen, den Ausschnitt im Karosserieteil so auszubilden, dass dieser Ausschnitt umlaufend geschlossen ist. Durch diese Ausbildung ist die Gesamtfestigkeit des aus dem Karosserieteil und der Befestigungsvorrichtung bestehenden Verbundes deutlich verbessert. Auch bei hohen Kräften, wie sie bei einem Unfall auftreten, ist sichergestellt, dass die Verbindung zwischen Befestigungsvorrichtung und Karosserieteil nicht bereichsweise gelöst wird, was rasch zu einem Versagen der gesamten Verbindung zwischen der Befestigungsvorrichtung und dem Karosserieteil führen würde. Schließlich ist durch die umlaufende Verbindung auch die Festigkeit des Karosserieteiles erhöht, da der im Karosserieteil gebildete Ausschnitt durch die Befestigungsvorrichtung vollständig geschlossen ist.

Die Befestigungsvorrichtung ist so in das Karosserieteil eingesetzt dass ein zur Aufnahme des Gurtrollers in der Befestigungsvorrichtung aussebildeter, topfförmiger Bereich durch das Karosserieteil hindurchtritt. So ist an der Befestigungsvorrichtung ein nach Möglichkeit vollständig umlaufender Rand gebildet, der - in Auszugsrichtung gesehen - hinter dem Karosserieteil zu liegen kommt. Durch diese hintergreifende Anordnung ergibt sich zusätzlich zu der bereits vorgesehenen Verbindung (Schweißen, Nieten, Kleben o.ä.) zwischen Befestigungsvorrichtung und Karosserieteil zusätzlich eine formschlüssige Verbindung, mit der die Gefahr eines Ablösens der Befestigungsvorrichtung vom Karosserieteil weiter vermindert ist.

Verwendungsgemäß wird vorgeschlagen, die dargestellte Befestigungsvorrichtung zur Montage eines Gurtrollers zu verwenden, wobei die Winkellage des Gurtrollers vorgegeben ist. Die Befestigungsvorrichtung dient in diesem Fall als Adapter, um einen vorhandenen Gurtroller, bei dem regelmäßig eine bestimmte Einbau - Winkellage konstruktiv vorgegeben ist, an die konkrete Einbausituation im Karosserieteil anzupassen.

In vorteilhafter Weiterbildung dieser Verwendung ist es vorgesehen, eine im wesentlich horizontale Winkellage des Gurtrollers einzustellen. Für diese Einbaulage sind besonders viele Gurtroller geeignet. Darüber hinaus wird vorgeschlagen, die Befestigungsvorrichtung so anzuordnen, dass der Gurtroller hängend angeordnet ist. Besonders vorteilhaft ist die Verwendung der Befestigungsvorrichtung in einem Fahrzeug mit Fließheck. Diese Fahrzeuge weisen regelmäßig einen schräg verlaufenden oberen Längsträger auf, der als Karosserieteil zur Aufnahme der Befestigungsvorrichtung besonders geeignet ist.

Die Erfindung ist nachstehend anhand des in den Figuren dargestellten Ausführungsbeispieles näher erläutert. Es zeigen:
- Fig. 1: ein Ansicht von schräg hinten auf die Innenseite eines Seitenteiles eines Kraftfahrzeuges,
- Fig. 2: eine Detailansicht aus Richtung X nach Fig. 1, und
- Fig. 3: einen Querschnitt durch einen Längsträger.

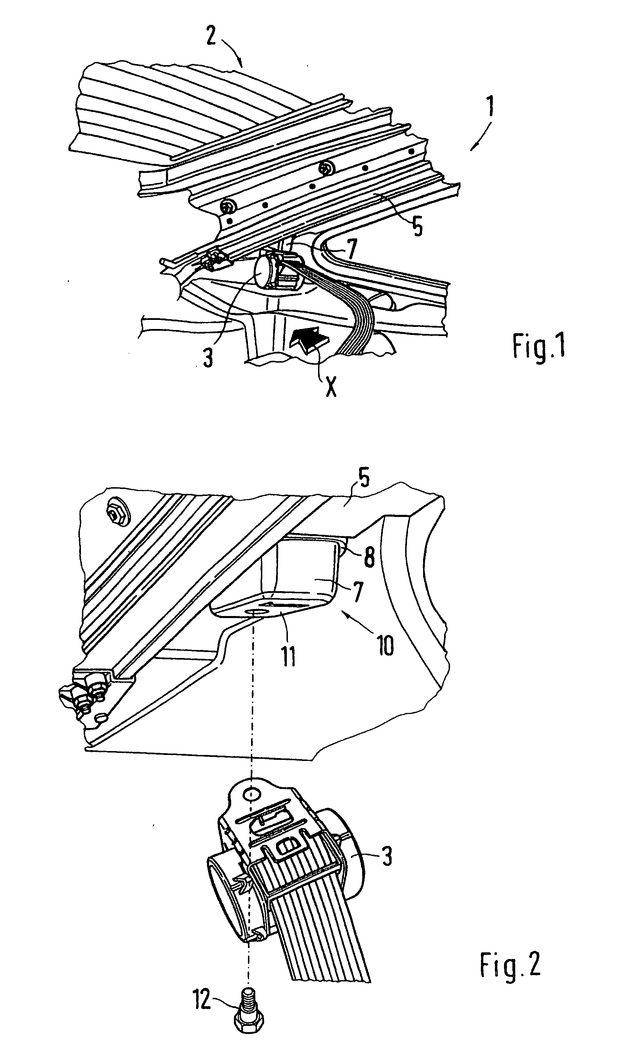

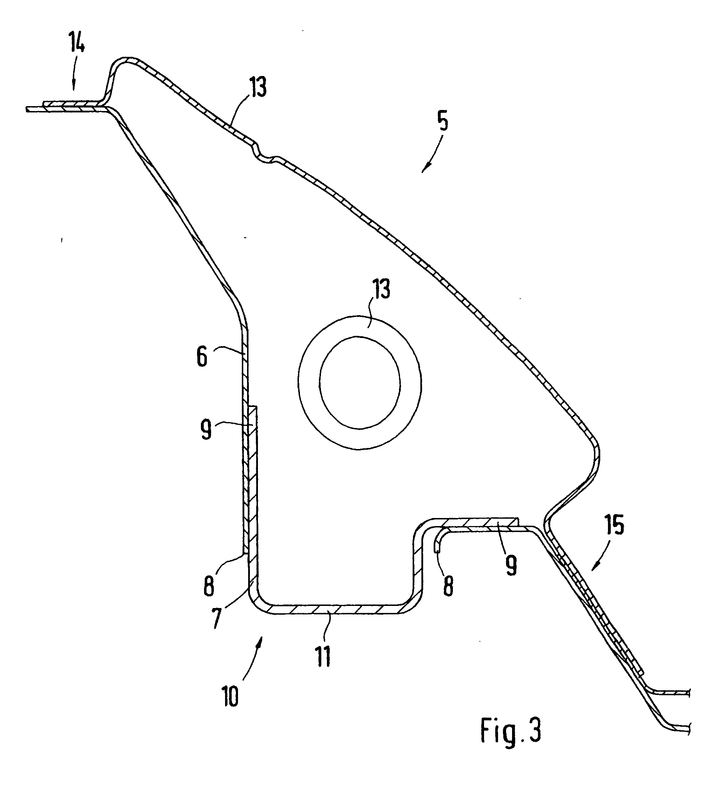

Figur 1 zeigt ein Seitenteil 1 eines nicht näher gezeigten Kraftfahrzeuges, das im Heckbereich 2 in Form eines Fließhecks ausgebildet ist. Ein Gurtroller 3 für eine nicht gezeigte hintere Sitzanlage soll an einem Längsträger 5 befestigt werden, der aus zwei Halbschalen 6, 13 (siehe Fig. 3) besteht. Die untere Halbschale 6 ist dabei durch einen entsprechenden Bereich des Seitenteiles 1 gebildet.

Wie in Fig. 3 in einer Schnittdarstellung gezeigt, ist der Gurtroller 3 an einer als Befestigungsvorrichtung dienenden Konsole 7 festgeschraubt, die von innen in einen Ausschnitt 8 der Halbschale 6 eingesetzt ist. Die Konsole 7 ist mit einem umlaufenden Rand 9 versehen, der an der Halbschale 6 anliegt und mit der Halbschale 6 durch Punktschweißen verbunden ist. Der Rand 9 ist dabei so geformt, das er über einen möglichst großen Bereich den Ausschnitt 8 hintergreift. Im mittleren Bereich der Konsole 7 ist ein topfförmiger Bereich 10 gebildet, der durch den Ausschnitt 8 hindurchgesteckt ist. An der Oberseite des topfförmigen Bereiches 10 ist eine Fläche 11 gebildet, die als Anlagefläche für den Gurtroller 3 dient. An der Rückseite der Fläche 11 ist eine (hier nicht gezeigte) Schweißmutter angebracht, um den Gurtroller 3 durch eine Schraube 12 (siehe Fig. 2) an der Konsole 7 befestigen zu können.

Im Längsträger 5 ist schließlich noch ein Rohr 13 zur Verstärkung der Karosserie aufgenommen.

Nach dem Einlegen der Konsole 7 in den Ausschnitt 8 der unteren Halbschale 6 und dem Verschweißen der beiden Teile wird das Rohr 13 eingelegt und der Längsträger 5 durch Hinzufügen der oberen Halbschale 13 komplettiert. Die Halbschalen 6, 13 werden schließlich in Randbereichen 14, 15 durch Schweißen miteinander verbunden.

Der Rand 9 der Konsole 7 befindet sich somit innerhalb des Längsträgers 5, während der topfförmige Bereich 10 der Konsole 7 durch den Ausschnitt 8 aus dem Längsträger 5 heraustritt. Die Lage der Fläche 11 ist so gewählt, dass sich für den Gurtroller 3 eine waagrechte Einbaulage ergibt. Wird bei einem Unfall der Gurtroller 3 belastet, so wird die Konsole 7 im Sinne eines Herausziehens aus dem Ausschnitt 8 beansprucht. Dies wird durch die Schweißverbindung zwischen dem Rand 9 und der unteren Halbschale 6 sowie zusätzlich durch den hintergreifendenden Teil des Randes 9 verhindert.

## Patentansprüche

1. Befestigungsvorrichtung für einen Gurtroller (3) in einem Kraftfahrzeug, wobei die Befestigungsvorrichtung (7) in einen Ausschnitt (Steines Karosserieteiles (6) einsetzbar und randseitig mit dem Karosserieteil verbundbar ist, wobei der Ausschnitt (8) umlaufend geschlossen ist, **dadurch gekennzeichnet, dass** im mittleren Bereich der Befestigungsvorrichtung (7) ein topfförmigen Bereich (10) gebildet ist und dass die Befestigungsvorrichtung (7) so in das Karosserieteil (6) einsetzbar ist, dass der topfförmiger Bereich (10) durch das Karosserieteil (6) hindurchtritt und an Seiner Oberseite eine Fläche (11) bildet, die als Anlagefläche für den Gurtroller (3) dient.

2. Verwendung einer Befestigungsvorrichtung nach Anspruch 1 zur Montage eines Gurtrollers (3), wobei eine vorgegebene Winkellage des Gurtrollers eingestellt ist.

3. Verwendung nach Anspruch 2, **dadurch gekennzeichnet, dass** der Gurtroller (3) im wesentlichen horizontal und hängend angeordnet ist.

4. Verwendung nach Anspruch 2 oder 3, **dadurch gekennzeichnet, dass** das Kraftfahrzeug ein Fließheck aufweist.

## Claims

1. A fastening device for a belt retractor (3) in a motor vehicle, wherein the fastening device (7) can be inserted into a cut-away portion (8) of a bodywork part (6) and can be connected at the edges to the bodywork part, and wherein the cut-away portion (8) is closed in a continuous manner, **characterized in that** a cup-shaped region (10) is formed in the middle region of the fastening device (7), and the fastening device (7) can be inserted into the bodywork part (6) in such a way that the cup-shaped region (10) passes through the bodywork part (6) and on its upper part it forms a face (11) which acts as an abutment face for the belt retractor (3).

2. Use of a fastening device according to Claim 1 for the assembly of a belt retractor (3), wherein a pre-set angular position of the belt retractor is set.

3. Use according to Claim 2, **characterized in that** the belt retractor (3) is arranged in a substantially horizontal and suspended manner.

4. Use according to Claim 2 or 3, **characterized in that** the motor vehicle has a fastback.

## Revendications

1. Dispositif de fixation d'un enrouleur de ceinture (3) d'un véhicule automobile, le dispositif de fixation (7) pouvant être inséré dans une découpe (8) d'une partie (6) de la carrosserie et pouvant être relié sur les bords à la partie de la carrosserie, la découpe (8) étant fermée périphériquement, **caractérisé en ce que** dans la zone centrale du dispositif de fixation (7) est formée une zone (10) en forme de pot et **en ce que** le dispositif de fixation (7) peut être inséré dans la partie (6) de la carrosserie de manière que la zone (10) en forme de pot passe à travers la partie (6) de la carrosserie et forme, sur sa face supérieure, une surface (11) qui sert de surface de contact à l'enrouleur de ceinture (3).

2. Utilisation d'un dispositif de fixation selon la revendication 1 pour le montage d'un enrouleur de ceinture (3), une position angulaire prédéfinie de l'enrouleur de ceinture étant réglée.

3. Utilisation selon la revendication 2, **caractérisée en ce que** l'enrouleur de ceinture (3) est disposé sensiblement horizontalement et suspendu.

4. Utilisation selon la revendication 2 ou 3, **caractérisée en ce que** le véhicule automobile présente une partie arrière aérodynamique.
